Europäisches Patentamt

European Patent Office

Office européen des brevets

(11) Veröffentlichungsnummer: **0 085 984**

**A1**

# (12) EUROPÄISCHE PATENTANMELDUNG

(21) Anmeldenummer: 83101201.8

(22) Anmeldetag: 08.02.83

(51) Int. Cl.³: **B 60 B 33/00**

(30) Priorität: 08.02.82 DE 3203886

(43) Veröffentlichungstag der Anmeldung:
17.08.83 Patentblatt 83/33

(84) Benannte Vertragsstaaten:
AT BE CH DE FR GB IT LI LU NL SE

(71) Anmelder: Heinrich Blickle GmbH & Co.KG
Robert-Bosch-Strasse 18
D-7463 Rosenfeld/Württ.(DE)

(72) Erfinder: Rauch, Hubert

D-7243 Vöhringen/Württ(DE)

(74) Vertreter: Säger, Manfred, Dipl.-Ing.
Patentanwälte Dipl.-Ing. Otto Flügel Dipl.-Ing. Manfred
Säger Cosimastrasse 81
D-8000 München 81(DE)

(54) Rolle, insbesondere Bock- und/oder Lenkrolle mit einer Schutzeinrichtung.

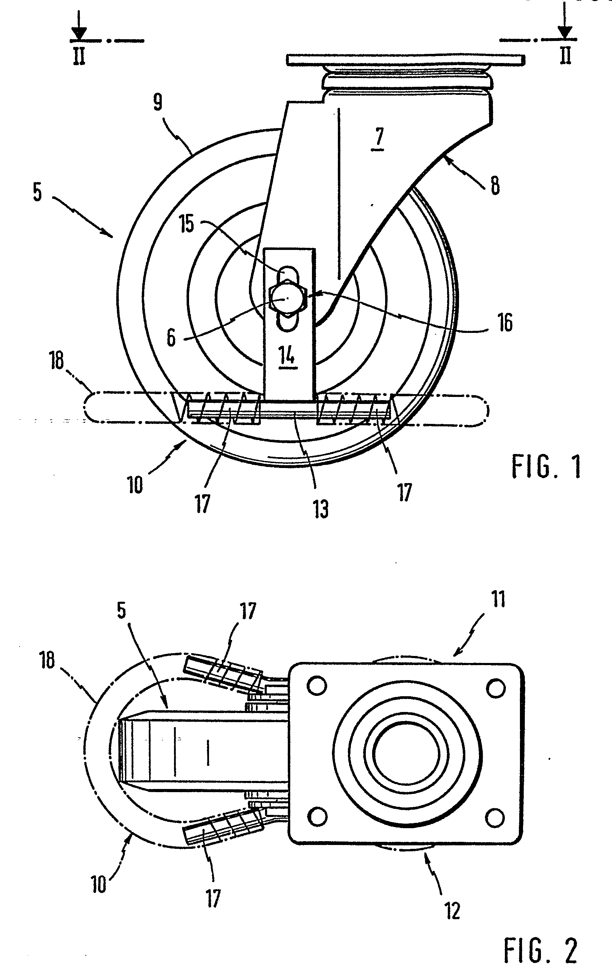

(57) Die Bock- und/oder Lenkrolle 5 weist auf den beiden Seiten der Rolle eine hervorstehende Achse 6 auf, die an den Schenkeln 7 einer die Lauffläche 9 der Rolle übergreifende Gabel 8 gelagert ist und die mit einer an der Gabel festgelegten Schutzreinrichtung 10 versehen ist. Diese weist zumindest eine bogenförmig angeordnete Schraubenfeder 18 auf, deren beide Enden an verschiedenen Seiten der Rolle 5 festgelegt sind und deren bogenförmiger Bereich sich mit Abstand von der Lauffläche 9 in Bodennähe erstreckt (Fig. 1).

FIG. 1

EP 0 085 984 A1

Dipl.-Ing. Otto Flügel, Dipl.-Ing. Manfred Säger, Patentanwälte, Cosimastr. 81, D-8 München 00 85 984

Heinrich Blickle GmbH & Co. KG                    11.863
7463 Rosenfeld/Württ.                             sä/st


Die Erfindung betrifft eine Rolle nach dem Oberbegriff des
Anspruchs 1.


Die Schutzeinrichtungen bei diesen bekannten Rollen sind
im allgemeinen als starre Flacheisenteile ausgebildet, die
entweder etwa konzentrisch zur Rolle deren Lauffläche abdecken, oder aber U-förmig gebogen ausgebildet sind, wobei
der U-Steg auf der einen Seite der Rolle ist und die U-Schenkel
den zwischen der Lauffläche der Rolle und dem Boden gebildeten
Spalt, also nur einen Teil der Lauffläche abdecken.

Diese bekannten Rollen werden zumeist bei Flurförderzeugen eingesetzt.
Insbesondere im Einsatzgebiet solcher Flurförderzeuge sind
häufig Rampen und dergleichen zu überwinden, die an ebene
Bereiche winklig, das heißt ohne Abrundung, anstoßen. Um
einen ordnungsgemäßen und störungsfreien Betrieb beim Einsatz
solcher bekannten Rollen zu gewährleisten, ist es erforderlich, daß die Schutzeinrichtung, das heißt das starre Flacheisen einen bestimmten Mindestabstand vom Boden aufweisen muß.
Infolgedessen besteht latent die Gefahr, daß trotz
der vorhandenen Schutzeinrichtung eine Hand oder ein Fuß
bzw. Schuh in den Bereich des Spaltes zwischen Boden und der
Rolle gelangen kann. Die vermittelte Sicherheit dieser bekannten Schutzeinrichtungen ist daher begrenzt.

Aber selbst dann, wenn die Schutzeinrichtung im Gefahrenfalle Objekte von der Berührung mit der Lauffläche der Rolle
fernhält und damit die ihr eigentlich zugedachte Schutzfunktion erfüllt, besteht aufgrund der starren Ausbildung
der Schutzeinrichtung eine hohe Verletzungsgefahr, die aber
bei den bekannten Vorrichtungen bislang in Kauf genommen
worden ist.

Blickle GmbH & Co. KG

Der Erfindung liegt die Aufgabe zugrunde, die Schutzwirkungen bei einer bekannten Rolle gemäß dem Oberbegriff des Anspruchs 1 bei deren gleichzeitig unbeschränkter Einsatzmöglichkeit zu erhöhen sowie die Verletzungsgefahr herabzusetzen.

Diese Aufgabe wird erfindungsgemäß durch den Gegenstand des Anspruchs 1 gelöst.

Die bogenförmig aufgespannte Schraubenfeder läßt somit zu, daß die Schutzeinrichtung einen geringeren Bodenabstand aufweisen kann, ohne daß die Einsatzmöglichkeit der Rolle beschränkt oder begrenzt wäre, oder gar zu Störungsfällen oder Beschädigungen führen kann. Somit ist die Schutzwirkung schon aufgrund dessen beträchtlich erhöht. Es kann mit hinreichender Zuverlässigkeit verhindert werden, daß ein Fuß in den Bereich unter die Lauffläche gelangen kann. Außerdem kann wegen der bogenförmigen und damit gespannten Anordnung der Schraubenfeder sichergestellt werden, daß diese im Gefahrenfalle etwas nachfedert und nachgibt, so daß gegenüber starren Anordnungen nach dem Stande der Technik die Gefahr von Verletzungen an der Schutzeinrichtung (nicht der Rolle) ebenfalls gelindert ist.

Zweckmäßige Ausgestaltungen und Weiterbildungen der Erfindung sind in den Unteransprüchen gekennzeichnet, wobei mit ganz besonderem Vorteil in dem von der Schraubfeder umschlossenen Raum ein gegenüber dieser elektrisch isolierter, bei der Verformung der Schraubenfeder aus der montierten Lage ansprechender elektrischer Schaltkontakt angeordnet ist, der insbesondere bei elektrisch angetriebenen Flurförderzeugen den Nothalt des angetriebenen Fahrzeugs, beispielsweise durch Unterbrechung der Energiezufuhr zum Elektromotor bewirken kann. Außerdem kann ein akustisches oder visuelles Signal zusammen mit dem Nothalt bewirkt werden.

Dipl.-Ing. Otto Flügel, Dipl.-Ing. Manfred Säger, Patentanwälte, Cosimastr. 81, D-8 München **0085984**

Heinrich Blickle GmbH & Co. KG


Die Erfindung wird nachfolgend anhand der Zeichnung näher beschrieben. Es zeigt:

Figur 1    eine erste Ausführungsform der Rolle, in schematischer Seitenansicht;

Figur 2    eine Ansicht II-II gemäß Figur 1;

Figur 3    eine zweite Ausführungsform einer Rolle und

Figur 4    eine Ansicht IV-IV gemäß Figur 3.


Die in den Figuren 1 und 2 insgesamt mit 5 bezeichnete Rolle ist mit ihrer Achse 6 an den Schenkeln 7 einer insgesamt 8 bezeichneten Gabel gelagert, die die Lauffläche 9 (Figur 2) übergreift.

An den beiden Schenkeln 7 der Gabel 8 bzw. an der Achse 6 ist eine insgesamt mit 10 bezeichnete Schutzeinrichtung vorgesehen. Diese weist auf jeder Seite 11 bzw. 12 der Rolle 5 angeordnete, T-förmig ausgebildete Halter 13 auf, dessen T-Balken 14 ein Langloch 15 aufweist, das von der Achse 6 in der Rolle 5 durchgriffen und mittels einer Mutter 16 in der gezeichneten montierten Lage festgelegt ist. Am Ende des T-Balkens, der aus Flachmaterial hergestellt ist, ist ein T-Steg angeordnet, der senkrecht zu der Längserstreckung des vertikal angeordneten T-Balkens 14 verläuft (Figur 1). Zugleich ist der T-Steg 17 spitzwinklig nach außen, das heißt von der Rolle 5 zur jeweils anderen Seite 11 bzw. 12 abgewandt, abgewinkelt, abgebogen (2). In diesen abgewinkelten Bereichen des T-Stegs 17 sind die beiden Enden einer insgesamt mit 18 bezeichneten Schraubenfeder angeordnet, so daß diese bogenförmig, wie Figur 2 zeigt, und parallel zur Ebene

Dipl.-Ing. Otto Flügel, Dipl.-Ing. Manfred Säger, Patentanwälte, Cosimastr. 81, D-8 München 0085984

Heinrich Blickle GmbH & Co. KG


des Bodens verläuft, wie Figur 1 ausweist.

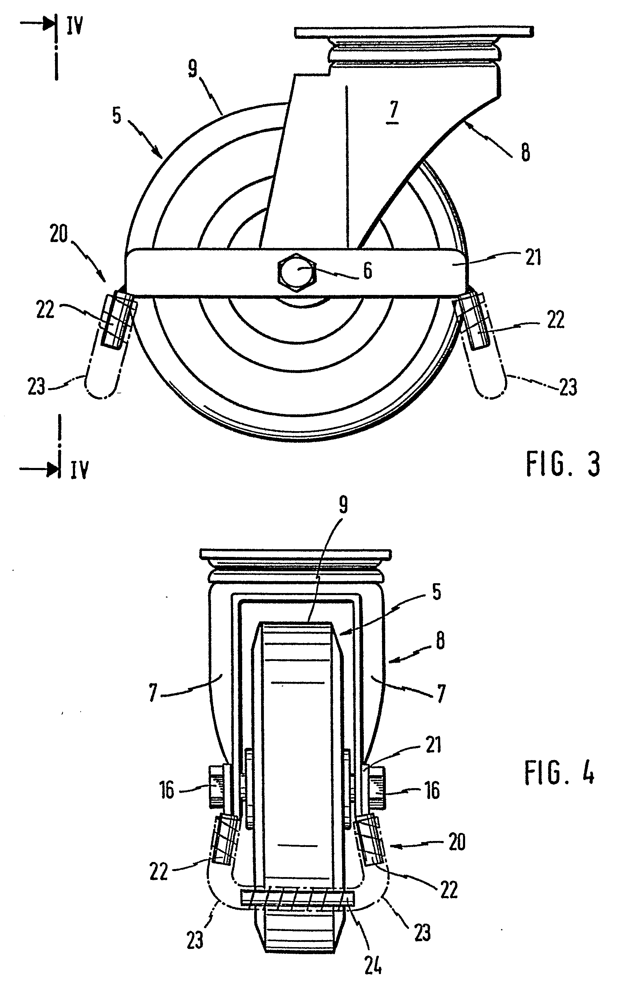

In den Figuren 3 und 4 ist eine zweite bevorzugte Ausführungsform der insgesamt mit 20 bezeichneten Schutzeinrichtung dargestellt, wobei die Rolle und die Gabel 8 jener gemäß den Figuren 1 und 2 entsprechen, so daß sie mit gleichen Bezugszeichen versehen und von einer erneuten Beschreibung Abstand genommen wird.

Die Schutzeinrichtung 20 besteht aus einem im wesentlichen waagrecht angeordneten Halter 21, dessen Länge in etwa dem Durchmesser der Rolle 5 entspricht und an dessen beiden Enden je ein Zapfen 22 aus Rundmaterial angebracht ist. Der Zapfen ist mit Bezug auf die Ebene des Flachmaterials 21 im spitzen Winkel nach außen (Figur 4) und zur Längserstreckung des Flachmaterials 21 mit einem stumpfen Winkel nach unten (Figur 3) abgewinkelt angeordnet. Die Enden einer insgesamt mit 23 bezeichneten Schraubenfeder sind an je einem Zapfen der beiden Halter angebracht, so daß in der Montagelage die Feder bogenförmig verläuft. Wie Figur 4 zeigt, ist im bogenförmigen Bereich zwischen den beiden Enden der Schrauben - feder 23 in dem von ihr umschlossenen Raum ein Stift 24 angeordnet, dessen Breite etwa jener der Lauffläche 9 der Rolle 5 entspricht. Infolgedessen ergibt sich über der Lauffläche 9 ein nicht gekrümmt verlaufender Bereich aufgrund der Erstreckung des Stiftes 23 der Schraubenfeder 23 (Figur 4).

0085984

Dipl.-Ing. Otto Flügel, Dipl.-Ing. Manfred Säger, Patentanwälte, Cosimastr. 81, D-8 München 81

Heinrich Blickle GmbH & Co. KG                    11.863
7463 Rosenfeld/Württ.                             sä/st

---

Rolle, insbesondere Bock- und/oder Lenkrolle mit einer
Schutzeinrichtung

---

A N S P R Ü C H E
- - - - - - - - - - - - - - - - -

1.  Rolle, insbesondere Bock- und/oder Lenkrolle, deren auf
    den beiden Seiten der Rolle hervorstehende Achse an den
    Schenkeln einer die Lauffläche der Rolle übergreifenden
    Gabel gelagert ist und die mit einer an der Gabel fest-
    gelegten Schutzeinrichtung versehen ist, d a d u r c h
    g e k e n n z e i c h n e t , daß die Schutzeinrichtung
    (10, 20) zumindest eine bogenförmig angeordnete Schraubenfeder (18, 23) aufweist, deren beide Ende an verschiedenen
    Seiten (11, 12) der Rolle (5) festgelegt sind und deren
    bogenförmiger Bereich sich mit Abstand von der Lauffläche
    (9)           in Bodennähe erstreckt.

2.  Rolle nach Anspruch 1, d a d u r c h  g e k e n n -
    z e i c h n e t ,   daß an jedem der beiden Schenkel
    (7) der Gabel (8) ein Halter (13; 21, 22) festgelegt
    ist, an dem das Ende der Schraubenfeder (18, 23) angebracht ist.

3.  Rolle nach Anspruch 1 oder 2, d a d u r c h  g e -
    k e n n z e i c h n e t , daß die Schutzeinrichtung (10,
    20) genau zwei Schraubenfedern (18, 23) aufweist und
    daß jeder Halter zur Aufnahme von zwei Enden der Schraubenfedern ausgelegt ist.

4.  Rolle nach einem der Ansprüche 1 bis 3, d a d u r c h
    g e k e n n z e i c h n e t ,   daß der Halter (13)

Heinrich Blickle GmbH & Co. KG

T-förmig ausgebildet ist, daß dessen T-Balken (14) zur Festlegung an dem Schenkel (7) der Gabel (8) bzw. der Achse (6) der Rolle (5) und daß jedes Ende des an dem Ende des T-Balkens (14) angeordneten T-Stegs (17) zur Aufnahme eines Endes der Schraubenfeder (18) ausgebildet ist.

5. Rolle nach Anspruch 4, d a d u r c h   g e k e n n - z e i c h n e t ,   daß die beiden Enden des T-Stegs (17) leicht zur, bezogen auf die Rolle (5) freien Seite nach außen abgebogen sind.

6. Rolle nach Anspruch 4 oder 5, d a d u r c h   g e - k e n n z e i c h n e t ,   daß der T-Balken (14) ein Langloch (15) aufweist und daß dieses von dem freien Ende der Achse (6) der Rolle (5) durchgriffen sowie an dieser festgelegt ist.

7. Rolle nach einem der Ansprüche 4 bis 6, d a d u r c h   g e k e n n z e i c h n e t ,   daß der T-Steg (17) senkrecht zu dem T-Balken (14) und mit einem Abstand von der Achse (6) angeordnet ist, der kleiner als der Durchmesser der Rolle (5) ist.

8. Rolle nach einem der Ansprüche 4 bis 7, d a d u r c h   g e k e n n z e i c h n e t ,   daß der T-Balken (14) vertikal verlaufend angebracht ist.

9. Rolle nach einem der Ansprüche 4 bis 7, d a d u r c h   g e k e n n z e i c h n e t ,   daß der T-Steg (17) zur Aufnahme der Enden je einer Schraubenfeder (18) als Rundmaterial ausgebildet ist.

10. Rolle nach einem der Ansprüche 1 bis 3, d a d u r c h   g e k e n n z e i c h n e t ,   daß der Halter aus Flach-

Heinrich Blickle GmbH & Co. KG

material (21) besteht, in dessen Zentrum eine von der Achse (6) der Rolle (5) durchgriffene Bohrung angebracht und dessen beide Enden zur Aufnahme je eines Endes jeder Schraubenfeder (23) ausgebildet ist.

11. Rolle nach Anspruch 10, d a d u r c h   g e k e n n - z e i c h n e t , daß an den beiden Enden des Flachmaterials (21) je ein Zapfen (22) aus Rundmaterial zur Aufnahme der Enden je einer Schraubenfeder (23) angeordnet ist, der zur Ebene des Flachmaterials (21), bezogen auf die Rolle, zur freien Seite nach außen mit einem spitzen Winkel und zur Längserstreckung des Flachmaterials (21) mit einem stumpfen Winkel nach unten abwinkelt abgebogen angeordnet ist.

12. Rolle nach Anspruch 10 oder 11, d a d u r c h   g e - k e n n z e i c h n e t , daß das Flachmaterial (21) eine Länge aufweist, die in etwa dem Durchmesser der Rolle (5) entspricht.

13. Rolle nach einem der Ansprüche 10 bis 12, d a d u r c h   g e k e n n z e i c h n e t , daß die mit ihren beiden Enden auf einen Zapfen (22) jedes der beiden Halter aufgeschobene Schraubenfeder (23) in ihrem bogenförmigen Bereich in dem von ihr umschlossenen Raum einen Stift (24) aufweist, dessen Länge etwa der Breite der Lauffläche (9) der Rolle (5) entspricht.

14. Rolle nach einem der Ansprüche 1 bis 13, d a d u r c h   g e k e n n z e i c h n e t , daß in dem von der Schraubenfeder (23) umschlossenen Raum ein gegenüber dieser elektrisch isolierter, bei deren Verformung aus der am Halter montierten Lage ansprechender, elektrischer Schaltkontakt angeordnet ist.

FIG. 1

FIG. 2

IV

9

5

20

22

23

7

8

6

21

22

23

IV

**FIG. 3**

9

5

7

8

7

21

16

16

22

20

22

23

23

24

**FIG. 4**

## EUROPÄISCHER RECHERCHENBERICHT

**Europäisches Patentamt**

**0085984**
Nummer der Anmeldung

EP 83 10 1201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 450 062 (VOSS)<br><br>* Vollständiger Text; Figuren 1-3 * | 1,2,7,8,10 | B 60 B 33/00 |
| X | DE-A-2 839 344 (MASCHINENFABRIK AUGSBURG)<br><br>* Vollständiger Text; Figuren 1,2 * | 1,4,6,7,8,10,12 | |
| A | US-A-2 996 752 (POPE)<br>* Vollständiger Text; Figuren 1-5 * | 1,6,10 | |
| A | US-A-3 744 080 (SMITH)<br>* Spalte 4, Zeilen 8-24; Figuren 1,2 * | 1 | |

RECHERCHIERTE SACHGEBIETE (Int. Cl. ³)

B 60 B 33

*Der vorliegende Recherchenbericht wurde für alle Patentansprüche erstellt.*

| Recherchenort | Abschlußdatum der Recherche | Prüfer |
|---|---|---|
| DEN HAAG | 13-04-1983 | AYITER I. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82